(19) Europäisches Patentamt
European Patent Office
Office européen des brevets

(11) **EP 4 716 335 A1**

(12) **EUROPEAN PATENT APPLICATION**
published in accordance with Art. 153(4) EPC

(43) Date of publication:
**25.03.2026 Bulletin 2026/13**

(21) Application number: **24818470.7**

(22) Date of filing: **16.05.2024**

(51) International Patent Classification (IPC):
*H04W 72/0446* (2023.01)

(52) Cooperative Patent Classification (CPC):
**H04W 4/40; H04W 24/02; H04W 72/0446;
H04W 72/0453; H04W 72/40**

(86) International application number:
**PCT/CN2024/093729**

(87) International publication number:
**WO 2024/250937 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **09.06.2023 CN 202310689020**

(71) Applicant: **Huawei Technologies Co., Ltd.
Shenzhen, Guangdong 518129 (CN)**

(72) Inventors:
• **XU, Jiaojiao
Shenzhen, Guangdong 518129 (CN)**
• **ZHANG, Yi
Shenzhen, Guangdong 518129 (CN)**
• **SU, Hongjia
Shenzhen, Guangdong 518129 (CN)**

(74) Representative: **Gill Jennings & Every LLP
The Broadgate Tower
20 Primrose Street
London EC2A 2ES (GB)**

(54) **SIGNAL TRANSMISSION METHOD AND APPARATUS**

(57)      This application provides a signal transmission method and an apparatus. The method includes: determining a first frequency domain resource in a sidelink resource pool, and sending a first signal through the first frequency domain resource. A bandwidth of the first frequency domain resource is equal to a maximum available bandwidth of the sidelink resource pool; and the first signal is located in a 1st symbol of a first time unit in time domain, where a signal in the 1st symbol is used for automatic gain control, and the first signal is used for sensing measurement on a sidelink. According to the method provided in this application, a first terminal device sends, in the 1st symbol of the first time unit, the first signal used for the sensing measurement, and the first signal may further keep an original function unchanged, that is, the first signal is used for the automatic gain control, so that the sensing measurement is implemented through the first signal without causing a loss to communication performance, and integrated sensing and communication on the sidelink is enabled.

Step 501: A first terminal device determines a first frequency domain resource in a sidelink resource pool

Step 502: The first terminal device sends a first signal through the first frequency domain resource, and sends a second signal through a second frequency domain resource

Step 503: A first device receives a third signal, and obtains environment sensing information around the first terminal device based on the first signal and the third signal

FIG. 5

**Description**

CROSS-REFERENCE TO RELATED APPLICATIONS

This application claims priority to Chinese Patent Application No. 202310689020.3, filed with the China National Intellectual Property Administration on June 9, 2023 and entitled "SIGNAL TRANSMISSION METHOD AND APPARATUS", which is incorporated herein by reference in its entirety.

TECHNICAL FIELD

This application relates to the field of communication technologies, and in particular, to a signal transmission method and an apparatus.

BACKGROUND

In a current wireless communication system, for example, a 5G communication system, a communication sensing technology is mainly applied to a vehicle-to-everything (vehicle-to-everything, V2X) technology. In the V2X, sensing information of a vehicle terminal mainly comes from an external vehicle-mounted radar. Based on a principle of a Doppler effect, the vehicle terminal can transmit an electromagnetic wave through the radar, and measure a moving speed of a target relative to the radar based on a received echo. Based on a time difference between the transmitted electromagnetic wave and the received echo, a distance of the target relative to the radar can be measured.

Oriented to a high-level autonomous driving service in the future, the vehicle terminal is required to have a higher sensing capability. In this case, the vehicle terminal needs to be equipped with more external sensing devices with higher precision. As a quantity of hardware devices is increased, costs are increased. In addition, with evolution of communication technologies, in a next-generation wireless communication system, it is possible to implement emerging technologies such as smart city, smart industry, internet of vehicles, and telemedicine. These emerging technologies also need a robust and high-precision sensing capability. Therefore, in a future wireless communication system, a novel information processing technology that implements coordination between both a sensing function and a communication function is of great significance.

Therefore, how to implement sensing measurement without affecting communication on a sidelink is an urgent problem to be resolved.

SUMMARY

This application provides a signal transmission method and an apparatus, to implement integrated sensing and communication on a sidelink.

According to a first aspect, this application provides a signal transmission method. An execution body of the method is a first terminal device or one or more modules configured for the first terminal device. An example in which the first terminal device is used as the execution body is used for description herein. A first frequency domain resource is determined in a sidelink resource pool, where a bandwidth of the first frequency domain resource is equal to a maximum available bandwidth of the sidelink resource pool; and a first signal is sent through the first frequency domain resource, where the first signal is located in a $1^{st}$ symbol of a first time unit in time domain. A signal in the $1^{st}$ symbol is used for automatic gain control, and the first signal is used for sensing measurement on a sidelink.

According to the method provided in this application, the first terminal device sends, in the $1^{st}$ symbol of the first time unit, the first signal used for the sensing measurement, and the first signal may further keep an original function unchanged, that is, the first signal is used for the automatic gain control. Because the first signal is located only in the $1^{st}$ symbol of the first time unit, and is not located in a symbol other than the $1^{st}$ symbol, data transmission is not affected. In this way, the sensing measurement is implemented through the first signal without causing a loss to communication performance, and integrated sensing and communication is implemented. Further, because the bandwidth of the first frequency domain resource is equal to the bandwidth of the sidelink resource pool, a bandwidth of the first signal sent in a measuring link resource pool may be maximized as much as possible, so that a greater gain is obtained in the sensing measurement performed based on the first signal.

In a possible implementation, the method further includes: sending a second signal through a second frequency domain resource, where the second signal is located in at least one symbol of the first time unit in time domain, and a starting symbol of the at least one symbol is a $2^{nd}$ symbol of the first time unit; and a bandwidth of the second frequency domain resource is less than the bandwidth of the first frequency domain resource.

In the method, when the first signal is sent, a bandwidth of another signal in the first time unit remains unchanged, so that forward compatibility is implemented.

In a possible implementation, the second signal includes at least one of the following: a demodulation reference signal, a signal carried on a physical sidelink control channel PSCCH, a signal carried on a physical sidelink shared channel PSSCH, and a signal carried on a physical sidelink feedback channel PSFCH.

In the method, an original function of the another symbol in the first time unit remains unchanged, that is, the another symbol in the first time unit is further used to send at least one of control information, signaling, and data, so that the sensing measurement is implemented through the first signal without causing the loss to the communication performance, and the integrated sensing and communication on the sidelink is enabled.

In a possible implementation, duration of the first signal is first duration, where the first duration is less than or equal to duration of the 1st symbol, and a start location of the first signal in time domain is a start location of the 1st symbol.

In a possible implementation, that the first frequency domain resource is determined in the sidelink resource pool includes: obtaining resource configuration information, where the resource configuration information indicates the first frequency domain resource; and determining the first frequency domain resource in the sidelink resource pool based on the resource configuration information.

In a possible implementation, the resource configuration information is from a network device or a directly connected terminal device, or the resource configuration information is predefined or preconfigured.

In a possible implementation, the method further includes: receiving a third signal, where the third signal is an echo signal of the first signal; and obtaining ambient environment sensing information of the first terminal device based on the first signal and the third signal.

In a possible implementation, the receiving the third signal includes: receiving the third signal in a first time range, where a start location of the first time range is later than or equal to the start location of the 1st symbol, and an end location of the first time range is earlier than or equal to an end location of the 1st symbol.

In a possible implementation, the first signal is determined based on a first sequence, and a type of the first sequence includes a ZC sequence, a PN sequence, a gold sequence, or an m sequence, where an initial value of the first sequence is determined based on an identifier of the first terminal device.

In the foregoing method, the first sequence is determined through the identifier of the first terminal device, and the first signal is scrambled through the identifier of the first terminal device. In this way, when receiving the echo signal of the first signal, the first terminal device can filter out, through the identifier of the first terminal device, interference of a signal from another device on the echo signal of the first signal, to achieve better sensing performance.

In a possible implementation, the initial value of the first sequence is determined based on a parameter $c_{init}$, and the parameter $c_{init}$ satisfies the following form: $c_{init}=P \times N_{UE-ID}$, where P represents an identifier of a spatial area in which the first terminal device is located, and $N_{UE-ID}$ represents the identifier of the first terminal device.

In a possible implementation, the identifier of the first terminal device is different from an identifier of a second terminal device, and the first terminal device and the second terminal device are located in a same spatial area; or the identifier of the first terminal device is the same as an identifier of a second terminal device, and the first terminal device and the second terminal device are located in different spatial areas.

In a possible implementation, the initial value of the first sequence is determined based on the parameter $c_{init}$, and the parameter $c_{init}$ satisfies the following form: $c_{init}=M \times N_{UE-ID}$, where M represents an identifier of a beam direction of the first terminal device, and $N_{UE-ID}$ represents the identifier of the first terminal device.

In a possible implementation, the identifier of the first terminal device is different from the identifier of the second terminal device, and the first terminal device and the second terminal device are located in a same beam direction; or the identifier of the first terminal device is the same as the identifier of the second terminal device, and the first terminal device and the second terminal device are located in different beam directions.

According to a second aspect, this application further provides a communication apparatus, and the communication apparatus can implement any method provided in the foregoing first aspect. The communication apparatus may be implemented by hardware, or may be implemented by hardware executing corresponding software. The hardware or the software includes one or more units or modules corresponding to the foregoing functions.

In a possible implementation, the communication apparatus includes: a processor. The processor is configured to support the communication apparatus in performing a corresponding function of the network device or the terminal device in the foregoing method. The communication apparatus may further include a memory. The memory may be coupled to the processor, and the memory stores program instructions and data that are necessary for the communication apparatus. Optionally, the communication apparatus further includes an interface circuit. The interface circuit is configured to support communication between the communication apparatus and a device such as a terminal apparatus.

In a possible implementation, the communication apparatus includes corresponding function modules, which are respectively configured to implement the steps in the foregoing method. The function may be implemented by hardware, or may be implemented by hardware executing corresponding software. The hardware or the software includes one or more modules corresponding to the foregoing functions.

In a possible implementation, a structure of the communication apparatus includes a processing unit and a communication unit. These units may perform corresponding functions in the foregoing method examples. For details, refer to the descriptions in the method provided in any aspect of the first aspect. Details are not described herein.

According to a third aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the method in any possible implementation of the first aspect through a logic circuit or by executing code instructions.

According to a fourth aspect, a communication apparatus is provided, including a processor and an interface circuit. The interface circuit is configured to receive a signal from another communication apparatus other than the communication apparatus and transmit the signal to the processor, or send a signal from the processor to another communication apparatus other than the communication apparatus. The processor is configured to implement the function modules of the method in any possible implementation of the first aspect through a logic circuit or by executing code instructions.

According to a fifth aspect, a computer-readable storage medium is provided. The computer-readable storage medium stores a computer program or instructions. When the computer program or the instructions are executed by a processor, the method in any possible implementation of the first aspect is implemented.

According to a sixth aspect, a computer program product storing instructions is provided. When the instructions are run by a processor, the method in any possible implementation of the first aspect is implemented.

According to a seventh aspect, a circuit is provided. The circuit is configured to execute the method in any possible implementation of the first aspect, and the circuit may include a chip circuit. Optionally, the circuit may be further coupled to a memory.

According to an eighth aspect, a chip is provided. The chip includes a processor, configured to implement the method in any possible implementation of the first aspect. Optionally, the chip may further include a memory. The chip may include a chip, or may include a chip and another discrete component.

## BRIEF DESCRIPTION OF DRAWINGS

FIG. 1 is a diagram of a structure of a sidelink resource pool according to an embodiment of this application;
FIG. 2 is a diagram of a structure of a sidelink resource pool according to an embodiment of this application;
FIG. 3 is a diagram of a communication system applicable to an embodiment of this application;
FIG. 4 is a diagram of a communication system applicable to an embodiment of this application;
FIG. 5 is a schematic flowchart of a signal transmission method according to an embodiment of this application;
FIG. 6 is a diagram of a sidelink resource pool according to an embodiment of this application;
FIG. 7 is a diagram of a structure of a time unit according to an embodiment of this application;
FIG. 8 is a diagram of a structure of a time unit according to an embodiment of this application;
FIG. 9 is a diagram of area division according to an embodiment of this application;
FIG. 10 is a diagram of a beam direction according to an embodiment of this application;
FIG. 11 is a diagram of an echo signal according to an embodiment of this application;
FIG. 12 is a diagram of signal receiving according to an embodiment of this application;
FIG. 13 is a diagram of signal receiving according to an embodiment of this application;
FIG. 14 is a diagram of signal receiving according to an embodiment of this application;
FIG. 15 is a diagram of a structure of a communication apparatus according to an embodiment of this application; and
FIG. 16 is a diagram of a structure of a communication apparatus according to an embodiment of this application.

## DESCRIPTION OF EMBODIMENTS

The following describes in detail embodiments of this application with reference to the accompanying drawings of the specification.

A communication method provided in embodiments of this application may be applied to long term evolution (long term evolution, LTE) or a 5th generation (5th generation, 5G) communication system, for example, 5G new radio (new radio, NR), or may be applied to various future communication systems, for example, a 6th generation (6th generation, 6G) communication system. The communication method provided in embodiments of this application may be further applied to fields such as vehicle-to-everything (vehicle-to-everything, V2X) communication, internet of vehicles, self-driving, and assisted driving.

A method and an apparatus provided in embodiments of this application are based on a same or similar technical concept. Because problem resolving principles of the method and the apparatus are similar, mutual reference may be made to implementations of the apparatus and the method. Repeated descriptions are not described.

The following first describes some terms in embodiments of this application, to facilitate understanding of a person skilled in the art.

In embodiments of this application, a network device may be a device in a wireless network, and the network device may also be referred to as a network apparatus. For example, the network device may be a radio access network (radio access network, RAN) node that connects a terminal device to the wireless network, and may also be referred to as an access network device. The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like. The network device may alternatively be a network device in a 5G mobile communication system. For example, a next generation NodeB (next generation NodeB, gNB), a transmission reception point (transmission reception point, TRP), or a TP in an NR system; or one antenna panel or one group of antenna panels (including a plurality of antenna panels) of a base station in the 5G mobile communication system; or the network device may alternatively be a network node that forms a gNB or a transmission point, for example, a BBU or a distributed unit (distributed unit, DU).

In some deployments, the network device may include a central unit (central unit, CU) and the DU. The network device may further include an active antenna unit (active antenna unit, AAU). The CU implements some functions of the gNB, and the DU implements some functions of the gNB. For example, the CU is responsible for processing a non-real-time protocol and service, to implement functions of a radio resource control (radio resource control, RRC) layer. The DU is responsible for processing a physical layer protocol and a real-time service, to implement functions of a radio link control (radio link control, RLC) layer, a media access control (media access control, MAC) layer, and a physical (physical, PHY) layer. In some deployments, the CU may be further divided into a central unit control plane (CU-CP) node and a central unit user plane (CU-UP) node. The CU-CP is responsible for a control plane function, and the CU-UP is responsible for a user plane function.

The terminal device related in embodiments of this application may be a wireless terminal device that can receive scheduling and indication information from the network device. The terminal device may be referred to as a terminal apparatus, and may also be referred to as user equipment (user equipment, UE), a mobile station (mobile station, MS), a mobile terminal (mobile terminal, MT), or the like. The terminal device may be a device that includes a wireless communication function (providing voice/data connectivity for a user), for example, a handheld device, a vehicle-mounted device, or a vehicle-mounted module that has a wireless connection function. Currently, some examples of the terminal device are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in the internet of vehicles, a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), a device-to-device (device-to-device, D2D) communication terminal device, a vehicle-to-everything (vehicle-to-everything, V2X) communication terminal device, a smart vehicle, an in-vehicle infotainment system (or referred to as a vehicle-mounted sending unit) (telematics box, T-box), a machine-to-machine/machine-type communication (machine-to-machine/machine-type communication, M2M/MTC) terminal device, an internet of things (internet of things, IoT) terminal device, and the like. For example, the terminal device may be a vehicle-mounted device, an entire vehicle device, a vehicle-mounted module, a vehicle, an on board unit (on board unit, OBU), a roadside unit (roadside unit, RSU), a T-box, a chip, or a system-on-chip (system-on-chip, SoC). The chip or the SoC may be mounted in the vehicle, the OBU, the RSU, or the T-box. The wireless terminal in the industrial control may be a camera, a robot, or the like. The wireless terminal in the smart home may be a television, an air conditioner, a sweeper, a speaker, a set-top box, or the like.

In this application, sensing measurement may also be referred to as wireless sensing, and means that environment sensing information is determined through a radio signal and a return signal of the radio signal. The environment sensing information includes but is not limited to information such as a position of a target, a speed of the target, a distance from the target, and a moving direction of the target. The target includes but is not limited to any object that can reflect the radio signal such as a device, a person, or an animal. An environment includes one or more of a room, a house, a vehicle, an enterprise, and the like.

A status of a target in the ambient environment may be determined through the environment sensing information. For example, in the V2X, a vehicle may determine a position, a speed, and a movement state (turning, merging, or reversing) of another vehicle or person in the ambient environment through the environment sensing information, to assist driving and improve driving safety.

In this application, a sidelink (sidelink, SL) resource pool (resource pool) may also be referred to as a resource pool for short. The resource pool may be configured by a network. For example, within network coverage, the network device sends resource pool information to a terminal device in a cell through a system information block (system information block, SIB), cell-specific (cell-specific) radio resource control (radio resource control, RRC) signaling, or user-specific (UE-specific) RRC signaling. The resource pool information indicates the resource pool. Alternatively, the resource pool may also be preconfigured or predefined.

The resource pool may include one or more channels, and one channel includes one resource block (resource block, RB) set (set). For example, a bandwidth of each channel in the resource pool may be 10 MHz. Certainly, the bandwidth of the channel may alternatively be another value. This is not specifically limited in this application.

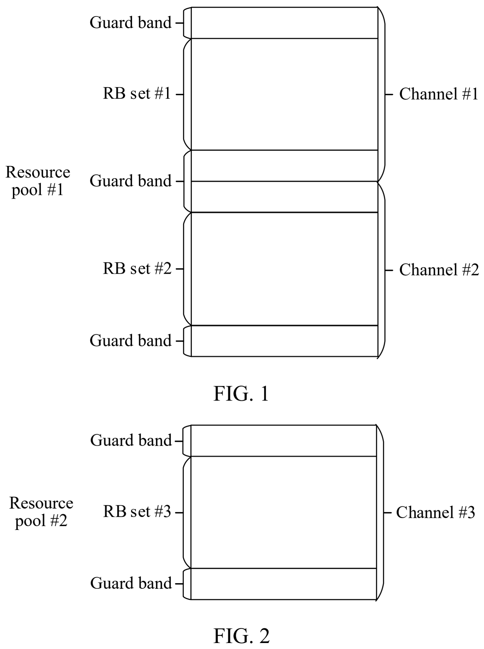

For example, as shown in FIG. 1, a resource pool #1 may include two channels, which are respectively a channel #1 and a channel #2. The channel #1 includes an RB set #1, and the channel #2 includes an RB set #2. Two sides of each channel may further include guard bands.

For example, as shown in FIG. 2, a resource pool #2 may include one channel, namely, a channel #3. The channel #3 includes an RB set #3.

As shown in FIG. 1, the channel #1 includes the RB set #1, and the channel #2 includes the RB set #2. The resource pool #1 includes the RB set #1, the RB set #2, and a guard band (guard band) between the RB set #1 and the RB set #2. Alternatively, the resource pool #1 includes an entire bandwidth of the channel #1 and an entire bandwidth of the channel #2. When one terminal device successfully performs listen-before-talk (listen-before-talk, LBT) on the two channels, namely, the channel #1 and the channel #2, resources available to the terminal device include not only resources in the RB sets in the two channels, but also the guard band between the two adjacent RB sets.

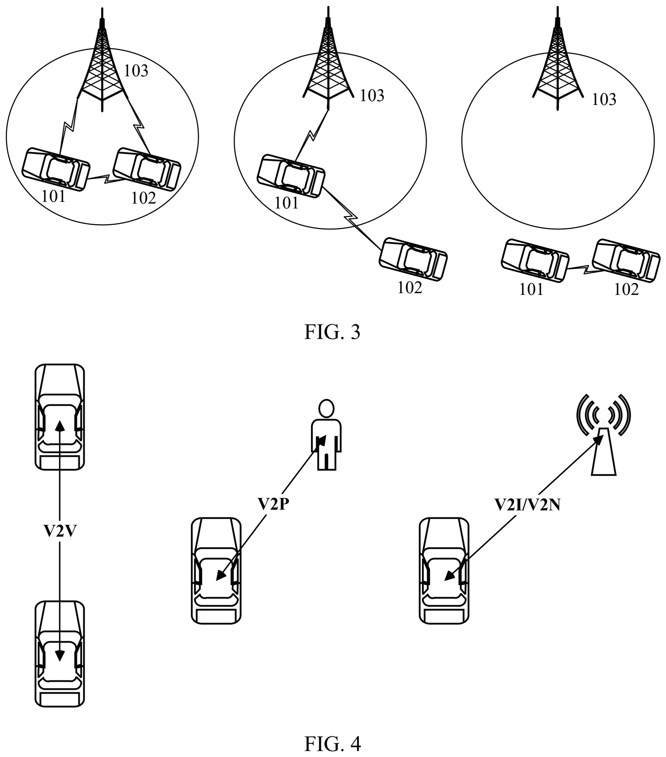

FIG. 3 shows a communication system applicable to an embodiment of this application. As shown in FIG. 3, the communication system may include a terminal device 101 and a terminal device 102. The terminal device 101 and the terminal device 102 may communicate with each other through a sidelink. For example, the terminal device 101 and the terminal device 102 may interact with each other through a proximity communication 5 (proximity communication, PC 5) interface. It may be understood that the communication system may further include more terminal devices, which are not shown in the figure.

In a possible implementation, the communication system may further include a network device 103. The network device 103 may communicate with the terminal device 101, or the network device 103 may communicate with the terminal device 102. As shown in FIG. 3, the terminal device 101 and the terminal device 102 may be within coverage of the network device 103; or one of the terminal device 101 and the terminal device 102 is within coverage of the network device 103, and the other of the terminal device 101 and the terminal device 102 is outside the coverage of the network device 103 (in the figure, an example in which the terminal device 101 is within the coverage of the network device 103, and the terminal device 102 is outside the coverage of the network device 103 is used); or both the terminal device 101 and the terminal device 102 are outside coverage of the network device 103.

In a possible implementation scenario, the communication system may be a V2X communication system. For example, as shown in FIG. 4, V2X may include vehicle-to-vehicle (vehicle-to-vehicle, V2V) direct communication, vehicle-to-infrastructure (vehicle-to-infrastructure, V2I) direct communication, vehicle-to-pedestrian (vehicle-to-pedestrian, V2P) direct communication, and a vehicle-to-network (vehicle-to-network, V2N) link or a vehicle-to-any entity V2X link.

As a vehicle becomes more intelligent, types of a vehicle-mounted sensor also become more diverse, such as a lidar, a camera, and a millimeter-wave radar. The vehicle-mounted sensor in the vehicle is used, so that the vehicle can sense information about traffic, a vehicle, a pedestrian, and the like around the vehicle body. The vehicle can improve safety of an assisted driving function such as adaptive cruise control of the vehicle by using these information, to implement intelligence of the vehicle. Currently, the vehicle-mounted sensor of the vehicle, such as the lidar, the camera, and the millimeter-wave radar has only a sensing function. However, in a future communication system, implementing integrated sensing and communication (integrated sensing and communication, ISAC) is an important technical trend. The ISAC, namely, a novel information processing technology that is based on software and hardware resource sharing or information sharing and that implements coordination between both a sensing function and a communication function can share a spectrum, a hardware platform, and even a baseband waveform and signal processing between communication and sensing, to improve spectrum efficiency, energy efficiency, and hardware efficiency of the system, so as to obtain an integration gain (Integration Gain). Further, performance of the two functions may be further improved by integrating mutual assistance and a mutual gain of the two functions, to obtain a coordination gain (Coordination Gain), for example, a communication-assisted sensing technology and a sensing-assisted communication technology.

Therefore, this application provides a method, to implement collaboration between both the sensing function and the communication function, so that sensing is performed without a communication loss, to achieve better sensing performance.

A network architecture and a service scenario that are described in embodiments of this application are intended to describe technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

When the method provided in this application is applied to the system in FIG. 3 or FIG. 4, the terminal device in FIG. 3 or FIG. 4 or a module in the terminal device may implement the method provided in embodiments of this application.

It may be understood that this application does not particularly limit a specific structure of an execution body of the method provided in embodiments of this application. The execution body may be applied to a first terminal device or a module in the first terminal device, provided that a program that records code of the method provided in embodiments of this application can be run to perform communication according to the method provided in embodiments of this application. Interaction between the terminal device and the network device is used as an example for description below.

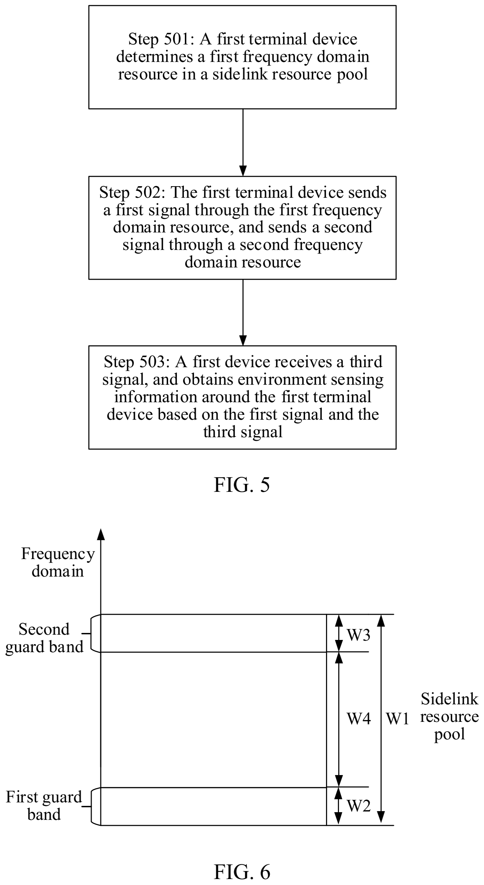

FIG. 5 is a schematic flowchart of a signal transmission method according to an embodiment of this application. The method includes the following steps.

Step 501: A first terminal device determines a first frequency domain resource in a sidelink resource pool.

In an implementation, the first terminal device may obtain resource configuration information, where the resource configuration information indicates the first frequency domain resource. Therefore, the first terminal device may determine the first frequency domain resource in the sidelink resource pool based on the resource configuration information. A manner of obtaining the resource configuration information is not limited to obtaining the resource configuration information from a network device, and obtaining the resource configuration information from a directly connected terminal device. The resource configuration information may also be preconfigured or predefined (for example, the resource configuration information is defined in a protocol).

In this application, a bandwidth of the first frequency domain resource is less than or equal to a maximum available bandwidth of the sidelink resource pool. A value of a bandwidth of a signal used for sensing measurement directly affects sensing performance. A larger bandwidth of the first frequency domain resource indicates a smaller distance resolution enabled by a sensing signal in the first frequency domain resource is, so that a closer target can be identified, and the sensing performance is better.

Some frequency domain resources in the sidelink resource pool may be used as guard bands. The sidelink resource pool may include at least one guard band. For example, as shown in FIG. 1, the sidelink resource pool includes four guard bands. If all guard bands in the sidelink resource pool can be used for data transmission, the maximum available bandwidth of the sidelink resource pool is equal to a bandwidth of the sidelink resource pool. If one or more guard bands in the sidelink resource pool cannot be used for data transmission, the maximum available bandwidth of the sidelink resource pool is less than the bandwidth of the sidelink resource pool.

For example, as shown in FIG. 6, the bandwidth of a sidelink resource pool is W1, and the sidelink resource pool further includes guard bands on a lowest side and a highest side of frequency domain, which are respectively a first guard band and a second guard band. A bandwidth of the first guard band is W2, and a bandwidth of the second guard band is W3.

In an implementation, if the first guard band and the second guard band of the sidelink resource pool can be used for data transmission, the maximum available bandwidth of the sidelink resource pool is equal to the bandwidth of the sidelink resource pool, and the bandwidth of the first frequency domain resource can be equal to the bandwidth of the sidelink resource pool. For example, the bandwidth of the first frequency domain resource is equal to the bandwidth W1 of the sidelink resource pool.

In an implementation, if the first guard band and the second guard band of the sidelink resource pool cannot be used for data transmission, the maximum available bandwidth of the sidelink resource pool is less than the bandwidth of the sidelink resource pool. In this case, the maximum available bandwidth of the sidelink resource pool is W1-(W2+W3)=W4. The bandwidth of the first frequency domain resource is less than the bandwidth of the sidelink resource pool. For example, the bandwidth of the first frequency domain resource can be equal to W1-(W2+W3)=W4.

In an implementation, if the first guard band of the sidelink resource pool cannot be used for data transmission, but the second guard band can be used for data transmission, the maximum available bandwidth of the sidelink resource pool is less than the bandwidth of the sidelink resource pool. In this case, the maximum available bandwidth of the sidelink resource pool is W1-W2+W3. The bandwidth of the first frequency domain resource is less than the bandwidth of the sidelink resource pool. For example, the bandwidth of the first frequency domain resource is equal to W1-W2+W3.

In an implementation, if the second guard band of the sidelink resource pool cannot be used for data transmission, but the first guard band can be used for data transmission, the maximum available bandwidth of the sidelink resource pool is less than the bandwidth of the sidelink resource pool. In this case, the maximum available bandwidth of the sidelink resource pool is W1-W3+W2. The bandwidth of the first frequency domain resource is less than the bandwidth of the sidelink resource pool. For example, the bandwidth of the first frequency domain resource is equal to W1-W3+W2.

In this application, the first terminal device may further determine a second frequency domain resource in the sidelink resource pool. For a specific determining manner, refer to descriptions of the first frequency domain resource. In an implementation, a bandwidth of the second frequency domain resource is less than the bandwidth of the first frequency domain resource.

Step 502: The first terminal device sends a first signal through the first frequency domain resource, and sends a second signal through the second frequency domain resource.

The first signal is located in a 1st symbol of a first time unit in time domain. The second signal is located in at least one symbol of the first time unit in time domain, and a starting symbol of the at least one symbol is a 2nd symbol of the first time unit. The first time unit may be a slot, a subframe, or the like. A " symbol" may be an orthogonal frequency division multiplexing (orthogonal frequency division multiplexing, OFDM) symbol.

In this application, duration of the first signal is first duration. The first duration is less than or equal to duration of the 1st symbol of the first time unit. In an implementation, a start location of the first signal in time domain is a start location of the 1st symbol of the first time unit.

In this application, a signal in the 1st symbol of the first time unit is used for automatic gain control (automatic gain control, AGC). For the automatic gain control, the signal in the 1st symbol of the first time unit is not used for data transmission, and a receiving end does not need to decode information carried by the signal in the 1st symbol. The receiving end detects only energy of the signal in the 1st symbol, to determine a gain of a signal in a symbol following the 1st symbol that is received. Therefore, the first signal in this application may be used for automatic gain control at the receiving end. Further, the first signal in this application may be further used for sensing measurement on a sidelink. Because the signal in the 1st symbol is not used for data transmission, the first signal is used for the sensing measurement on the sidelink, and does not affect the communication on the sidelink.

In this application, the first signal may occupy only a part of duration of the 1st symbol of the first time unit, that is, the duration of the first signal is less than the duration of the 1st symbol. In this case, in addition to the first signal, the 1st symbol of the first time unit may further include another signal, for example, include a fourth signal. The fourth signal and the first signal do not overlap in time domain. The fourth signal may be the same as the first signal (for example, a signal waveform of the fourth signal is the same as a signal waveform of the first signal), or the fourth signal may be the same as or partially the same as a signal in the 2nd symbol of the first time unit. Both the fourth signal and the first signal are used for the automatic gain control at the receiving end, and whether the fourth signal is used for the sensing measurement on the sidelink is not limited in this application.

For the automatic gain control, the following processes may exist: It is assumed that a device receiving the second signal is a third terminal device, and the third terminal device first receives the first signal, and then adjusts a gain of the received signal based on energy of the received first signal, so that strength of the received signal is kept stable, and receiving quality of the received signal is ensured. For example, if the third terminal device determines that energy of a received first channel is greater than a threshold, a gain of a signal at a radio frequency end is reduced; and if the third terminal device determines that energy of a received first channel is less than or equal to a threshold, a gain of a signal at a radio frequency end is increased. In this way, it can be ensured that the strength of the received signal is kept within a preset range.

In this application, the second signal includes at least one of the following:
a demodulation reference signal (demodulation reference signal, DMRS), a signal carried on a physical sidelink control channel (physical sidelink control channel, PSCCH), a signal carried on a physical sidelink shared channel (physical sidelink shared channel, PSSCH), and a signal carried on a physical sidelink feedback channel (physical sidelink feedback channel, PSFCH).

The DMRS may be used for channel estimation. The signal carried on the PSCCH may include information such as sidelink control information (sidelink control information, SCI). The signal carried on the PSSCH may include at least one of control information, data, and SCI feedback information. The signal carried on the PSFCH may include sidelink feedback information, and the sidelink feedback information may be used to feed back data information. The sidelink feedback information may include hybrid automatic repeat request (hybrid automatic repeat request, HARQ) acknowledgement feedback information, for example, an acknowledgment (acknowledge, ACK) or a negative acknowledgment (negative acknowledge, NACK). The sidelink feedback information may further include information such as channel state indicator (channel state information, CSI) feedback information.

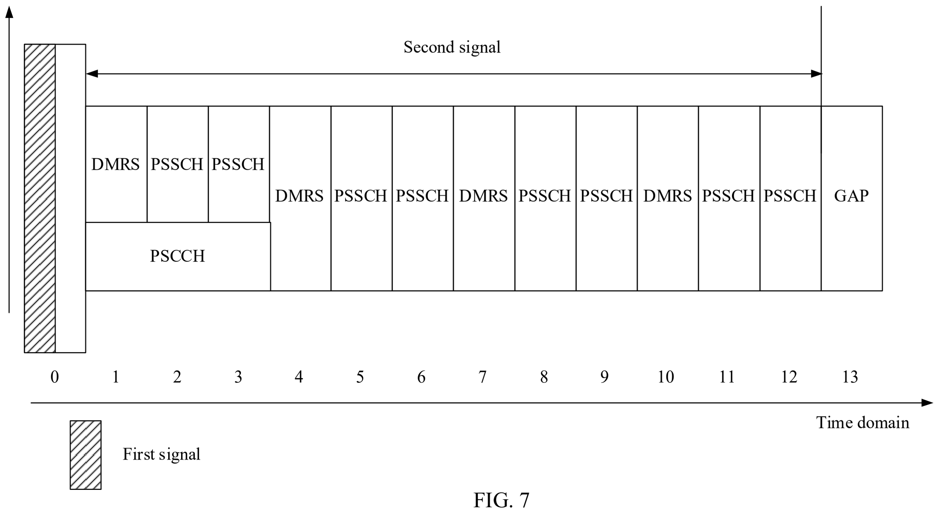

For example, as shown in FIG. 7, an example in which the first time unit includes 14 symbols is used. A symbol 0 of the first time unit includes the first signal, and the duration of the first signal is less than duration of the symbol 0. The first time unit further includes the second signal. Specifically, the second signal is located in a range from a symbol 1 to a symbol 12 of the first time unit, and a bandwidth of the first signal is greater than a bandwidth of the second signal. The symbol 1 of the first time unit includes the DMRS and the signal carried on the PSCCH, and the two signals occupy different frequency domain resources in the symbol 1. A symbol 2 and a symbol 3 of the first time unit include the signal carried on the PSSCH and the signal carried on the PSCCH, and the two signals occupy different frequency domain resources in the symbol 2 and the symbol 3. A symbol 4, a symbol 7, and a symbol 10 of the first time unit include the DMRS. A symbol 5, a symbol 6, a symbol 8, a symbol 9, a symbol 11, and the symbol 12 of the first time unit include the signal carried on the PSCCH. A symbol 13 of the first time unit is a guard period (guard period, GAP) symbol, and the first terminal device does not send a signal in the symbol 13.

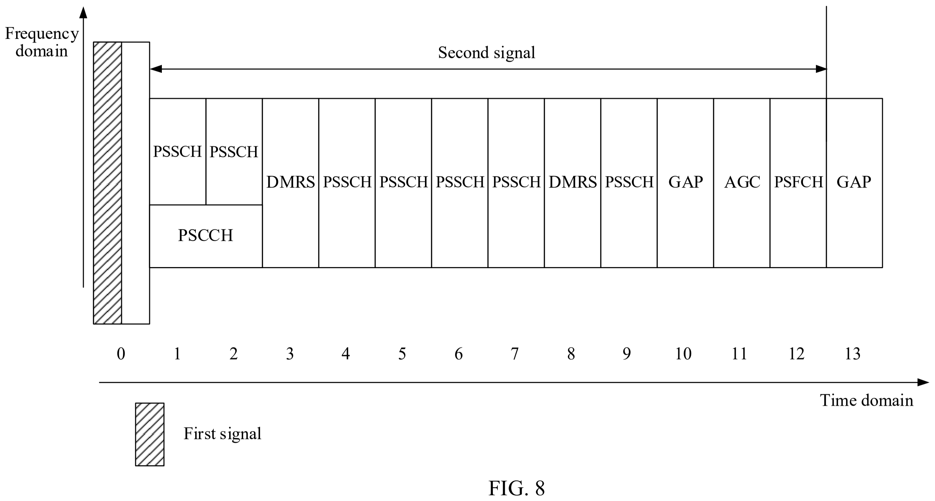

For another example, as shown in FIG. 8, an example in which the first time unit includes 14 symbols is used. The 1st symbol of the first time unit includes the first signal, and the duration of the first signal is less than duration of a symbol 0. The first time unit further includes the second signal, and the bandwidth of the first signal is greater than the bandwidth of the second signal. Specifically, the second signal is located in a range from a symbol 1 and a symbol 9 and a range from a symbol 11 to a symbol 12 of the first time unit. The symbol 1 and a symbol 2 of the first time unit include the signal carried on the PSSCH and the signal carried on the PSCCH, and the two signals occupy different frequency domain resources in the symbol 1 and the symbol 2. The symbol 2 and a symbol 8 of the first time unit include the DMRS. A symbol 4 to a symbol 7 and the symbol 9 of the first time unit include the signal carried on the PSSCH. The symbol 11 of the first time unit includes a signal used for the AGC, and a signal in the symbol 11 may be a copy of a signal in the symbol 12. The symbol 11 of the first time unit includes the signal carried on the PSFCH. A symbol 10 and a symbol 13 of the first time unit are used as GAP symbols.

In this application, the first signal is determined based on a first sequence. A type of the first sequence includes but is not limited to a ZC (Zadoff-Chu) sequence, a pseudo noise (pseudo-noise, PN) sequence, a gold sequence, an m sequence, and the like.

In an implementation, an initial value of the first sequence is determined based on to an identifier of the first terminal device.

For example, an example in which the first sequence is a PN sequence of 31 bits, and a first sequence r(n) may satisfy the following form:

$$r(n) = \frac{1}{\sqrt{2}}(1 - 2 \cdot c(2n)) + j \frac{1}{\sqrt{2}}(1 - 2 \cdot c(2n+1))\ ;$$

and

$$c(n) = \left(x_1(n+N_C) + x_2(n+N_C)\right)\mathrm{mod}2$$

$$x_1(n+31) = \left(x_1(n+3) + x_1(n)\right)\mathrm{mod}2$$

$$x_2(n+31) = \left(x_2(n+3) + x_2(n+2) + x_2(n+1) + x_2(n)\right)\mathrm{mod}2$$

$N_C$=1600, $x_1(n)$ and $x_2(n)$ are two m sequences, 31 initial values of $x_1(n)$ are $x_1(0)$=1, and $x_1(n)$=0, where n=1, 2, ..., and 30, 31 initial values of $x_2(n)$ are determined based on a parameter $c_{init}$, and the parameter $c_{init}$ is determined based on the identifier of the first terminal device. For example, the parameter $c_{init}=N_{UE\text{-}ID}= \sum_{i=0}^{30} x_2(i) \cdot 2^i$, where i=1, 2, ..., and 30, and $N_{UE\text{-}ID}$ represents the identifier of the first terminal device.

In the foregoing method, the first sequence is determined through the identifier of the first terminal device, and the first signal is scrambled through the identifier of the first terminal device. In this way, when receiving an echo signal of the first signal, the first terminal device can filter out, through the identifier of the first terminal device, interference of a signal from another device on the echo signal of the first signal, to achieve better sensing performance.

In an implementation, a space in which terminal devices are located may be divided into different areas. Identifiers of the terminal devices in different areas may be the same and identifiers of the terminal devices in a same area may be different. In this way, a quantity of bits needed by the identifiers of the terminal devices is reduced, load of the first sequence is reduced, and a capability requirement and a decoding requirement for sending the first signal by the terminal device are reduced.

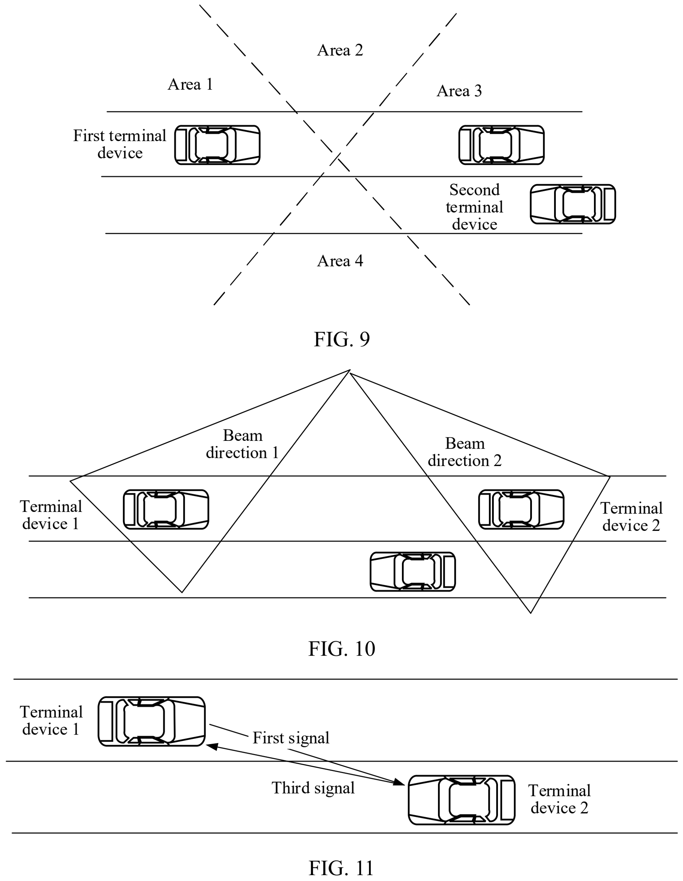

For example, as shown in FIG. 9, the space may be divided into four areas, which are respectively an area 1, an area 2, an area 3, and an area 4. Value ranges of terminal devices in the four areas may all be {0, 1, 2, ..., and Pconst}, where Pconst is an integer greater than 0. Assuming that the first terminal device and a second terminal device are located in different spatial areas, for example, the first terminal device is located in the area 1, and the second terminal device is located in the area 3, the identifier of the first terminal device may be the same as or different from an identifier of the second terminal device. Certainly, if the first terminal device and the second terminal device are located in a same spatial area, the identifier of the first terminal device is different from the identifier of the second terminal device.

In this scenario, the parameter $c_{init}$ may further satisfy the following form:

$$c_{init}=P \times N_{UE\text{-}ID}.$$

P represents an identifier of a spatial area in which the first terminal device is located, and $N_{UE\text{-}ID}$ represents the

identifier of the first terminal device. For example, when the first sequence is the PN sequence, a plurality of initial values $x_2$ (i) of $x_2(n)$ satisfy: $c_{init}=P \times N_{UE\text{-}ID}= \sum_{i=0}^{30} x_2(i) \cdot 2^i$ , where i=1, 2, and the like.

In an implementation, terminal devices in different beam directions may be grouped into different groups, and terminal devices in a same beam direction may be grouped into one group. In this way, identifiers of the terminal devices in the different beam directions may be the same and identifiers of the terminal devices in the same beam direction may be different, but a value range of each group of the terminal devices may be the same. In this way, a quantity of the bits needed by the identifiers of the terminal devices can be reduced, load of the first sequence can be reduced, and a capability requirement and a decoding requirement for sending the first signal by the terminal device can be reduced.

For example, as shown in FIG. 10, it is assumed that the first terminal device is located in a beam direction 1, and the second terminal device is located in a beam direction 2. Value ranges of terminal devices in the two beam directions may be {0, 1, 2, ..., and Pconst}, where Pconst is an integer greater than 0. The identifier of the first terminal device may be the same as or different from the identifier of the second terminal device.

Certainly, if the first terminal device and the second terminal device are located in a same beam direction, the identifier of the first terminal device is different from the identifier of the second terminal device.

In this scenario, the parameter $c_{init}$ may further satisfy the following form:

$$c_{init}=M \times N_{UE\text{-}ID}.$$

M represents an identifier of the beam direction in which the first terminal device is located, and $N_{UE\text{-}ID}$ represents the identifier of the first terminal device. For example, when the first sequence is the PN sequence, a plurality of initial values $x_2(i)$ of $x_2(n)$ satisfy: $c_{init}=M \times N_{UE\text{-}ID}= \sum_{i=0}^{30} x_2(i) \cdot 2^i$ , where i=1, 2, and the like.

Step 503: A first device receives a third signal, and obtains ambient environment sensing information of the first terminal device based on the first signal and the third signal.

The third signal is the echo signal (which may also be referred to as a reflected signal) of the first signal. The third signal is a signal obtained after the first signal is reflected by another device or target.

For example, as shown in FIG. 11, the first signal sent by a terminal device 1, after being reflected by a terminal device 2, is received by the terminal device 1. The signal received by the terminal device 1 is the third signal.

In this application, the first terminal device may receive the third signal within a first time range. A start location of the first time range is later than or equal to the start location of the 1st symbol, and an end location of the first time range is earlier than or equal to an end location of the 1st symbol.

For example, it is assumed that the start location of the 1st symbol of the first time unit in time domain is a S1, and the end location of the 1st symbol of the first time unit in time domain is a S2.

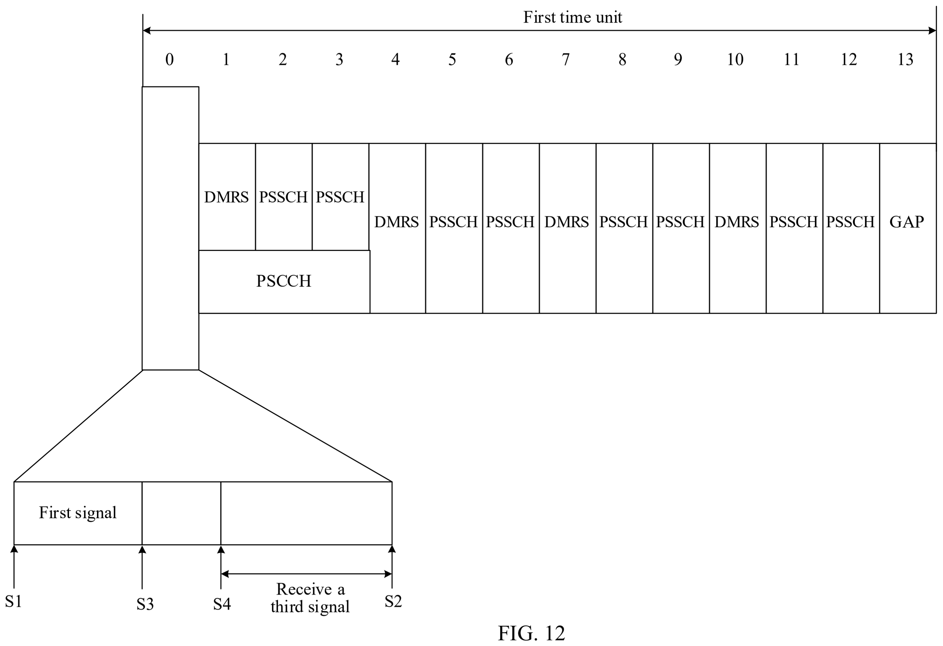

In an implementation, as shown in FIG. 12, the first terminal device sends the first signal between the start location of the 1st symbol of the first time unit and a location S3, and the location S3 is located between S1 and S2. The first terminal device receives the echo signal (namely, the third signal) of the first signal between a location S4 and S2, and the location S4 is located between S3 and S2. Duration between S3 and S4 is greater than 0. The first terminal device does not send a signal between S3 and S4, and a gap between S3 and S4 is used as a receive/transmit transition gap. This implementation is applicable to a scenario in which the first terminal device sends a signal and receives a signal by using one set of antennas.

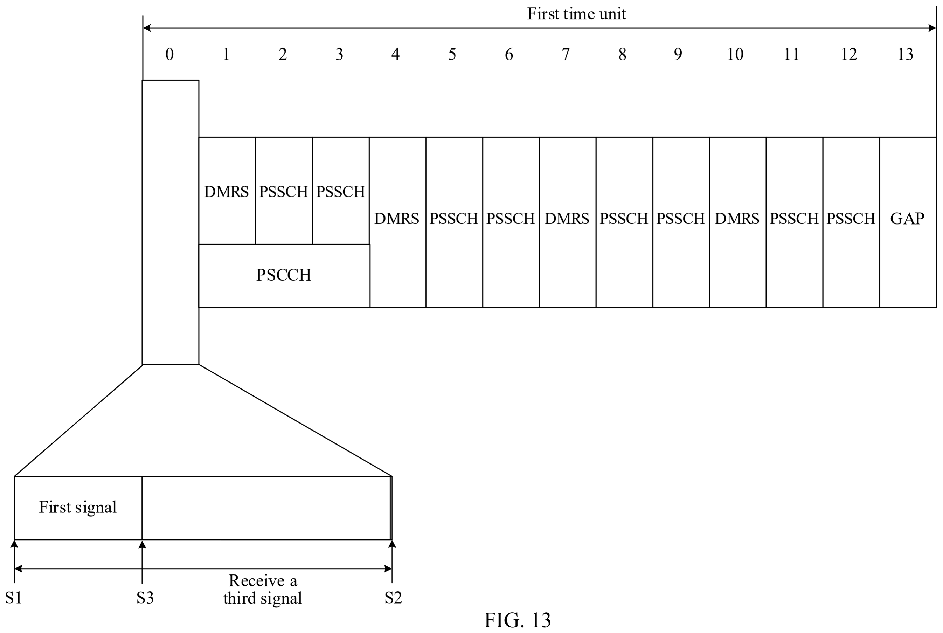

In an implementation, as shown in FIG. 13, the first terminal device sends the first signal between the start location of the 1st symbol of the first time unit and a location S3, and the location S3 is located between S1 and S2. The first terminal device receives the echo signal (namely, the third signal) of the first signal between S1 and S2. This implementation is applicable to a scenario in which the first terminal device separately sends a signal and receives a signal by using different antennas. In this implementation, ambient environment sensing information including environment sensing information in a near-end dead zone can be obtained.

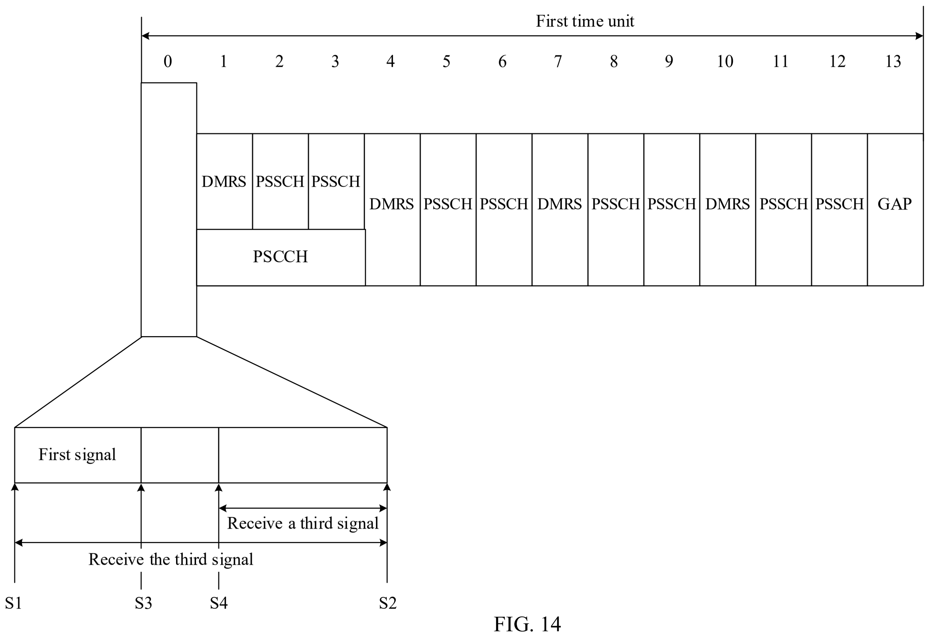

In an implementation, as shown in FIG. 14, the first terminal device sends, between the start location of the 1st symbol of the first time unit and a location S3, the first signal by using a first antenna, and the location S3 is located between S1 and S2. The first terminal device receives, between a location S4 and S2, the echo signal (namely, the third signal) of the first signal by using the first antenna, and the location S4 is located between S3 and S2. Duration between S3 and S4 is greater than 0. The first terminal device does not use the first antenna to send a signal between S3 and S4, and a gap between S3 and S4 is used as a receive/transmit transition gap. The first terminal device may further receive, between S1 and S2, the third signal of the first signal by using a second antenna. This implementation is applicable to a scenario in which the first terminal device sends a signal and receives a signal by using a plurality sets of antennas. In this implementation, ambient environment sensing information including environment sensing information in a dead zone can be obtained. The terminal device receives the third signal by using the plurality of antennas, to obtain redundant environment sensing information, so as to improve sensing precision by using the redundant environment sensing information.

In this application, the environment sensing information obtained by the first terminal device may include but is not limited to information such as a location and a speed of a target that reflects the first signal, a distance between the target and the first terminal device, and a moving direction of the target. The target includes but is not limited to any object that can reflect the first signal, such as a device, a person, or an animal.

For example, based on a propagation speed of a signal, a distance s of the target that reflects the first signal may be determined as: $s=ct/2$, where t is a time period from a time point at which the first signal is sent to a time point at which the third signal is received, and c is the propagation speed of the signal, namely, a speed of light.

For example, when the first terminal device moves relative to the target that reflects the first signal, a frequency of the third signal is different from a frequency of the first signal. For example, when the target approaches the first terminal device, the frequency of the third signal is higher than the frequency of the first signal. On the contrary, when the target moves away from the first terminal device, the frequency of the third signal is lower than the frequency of the first signal. Therefore, according to this principle, a moving speed of the target relative to the first terminal device may be measured by detecting a frequency difference between the frequency of the third signal and the frequency of the first signal.

According to the method provided in this application, the first terminal device sends, in the 1st symbol of the first time unit, the first signal used for the sensing measurement, and an original function of another symbol of the first time unit is not changed. In other words, the another symbol of the first time unit is still used to send at least one of control information, signaling, and data. Because the first signal is located only in the 1st symbol of the first time unit, and is not located in a symbol other than the 1st symbol, data transmission is not affected. In this way, the sensing measurement is implemented through the first signal without causing a loss to communication performance, and integrated sensing and communication is implemented.

In the foregoing embodiments provided in this application, the method provided in embodiments of this application is separately described from a perspective of interaction between devices. To implement the functions in the method provided in embodiments of this application, the terminal device may include a hardware structure and/or a software module, and implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely logical function division. In actual implementation, another division manner may be used. In addition, each functional module in each embodiment of this application may be integrated into one processor, or may exist alone physically, or two or more modules may be integrated into one module. The foregoing integrated module may be implemented in a form of hardware, or may be implemented in a form of a software functional module.

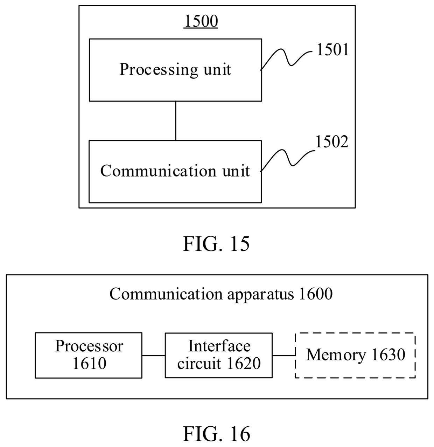

Same as the foregoing concept, as shown in FIG. 15, an embodiment of this application further provides a communication apparatus 1500, configured to implement a function of the first terminal device in the foregoing method. For example, the apparatus may be a software module or a chip system. In this embodiment of this application, the chip system may include a chip, or may include the chip and another discrete component. The communication apparatus 1500 may include a processing unit 1501 and a communication unit 1502.

In this embodiment of this application, the processing unit may also be referred to as a processor, a processing board, a processing module, a processing apparatus, or the like. The communication unit may also be referred to as a transceiver, a transceiver machine, a transceiver apparatus, a transceiver unit, or the like. The transceiver unit may include a sending unit and/or a receiving unit, which are respectively configured to perform a sending step and a receiving step of the first terminal device in the foregoing method embodiments.

With reference to FIG. 15 and FIG. 16, the following describes in detail the communication apparatus provided in this embodiment of this application. It should be understood that descriptions of apparatus embodiments correspond to the descriptions of the method embodiments. Therefore, for content that is not described in detail, refer to the foregoing method embodiments. For brevity, details are not described herein again.

In an implementation, the communication apparatus 1500 may perform the following functions.

A processing unit is configured to determine a first frequency domain resource in a sidelink resource pool, where a bandwidth of the first frequency domain resource is equal to a bandwidth of the sidelink resource pool; and a communication unit is configured to send a first signal through the first frequency domain resource, where the first signal is located in a 1st symbol of a first time unit in time domain. A signal in the 1st symbol is used for automatic gain control, and the first signal is used for sensing measurement on a sidelink.

In an implementation, the communication unit is further configured to send a second signal through a second frequency domain resource, where the second signal is located in at least one symbol of the first time unit in time domain, and a starting symbol of the at least one symbol is a 2nd symbol of the first time unit; and a bandwidth of the second frequency domain resource is less than a bandwidth of the first frequency domain resource.

In an implementation, the second signal includes at least one of the following:

a demodulation reference signal, a signal carried on a physical sidelink control channel PSCCH, a signal carried on a physical sidelink shared channel PSSCH, and a signal carried on a physical sidelink feedback channel PSFCH.

In an implementation, duration of the first signal is first duration. The first duration is less than or equal to duration of the 1st symbol, and a start location of the first signal in time domain is a start location of the 1st symbol.

In an implementation, the processing unit is specifically configured to:

obtain resource configuration information, where the resource configuration information indicates the first frequency domain resource; and
determine the first frequency domain resource in the sidelink resource pool based on the resource configuration information.

In an implementation, the resource configuration information is from a network device or a directly connected terminal device, or the resource configuration information is predefined or preconfigured.

In an implementation, the communication unit is further configured to:

receive a third signal, where the third signal is an echo signal of the first signal; and
the processing unit is further configured to obtain ambient environment sensing information of the first terminal device based on the first signal and the third signal.

In an implementation, the communication unit is specifically configured to: receive the third signal in a first time range, where a start location of the first time range is later than or equal to the start location of the 1st symbol, and an end location of the first time range is earlier than or equal to an end location of the 1st symbol.

In an implementation, the first signal is determined based on a first sequence, and a type of the first sequence includes a ZC sequence, a PN sequence, a gold sequence, or an m sequence, where an initial value of the first sequence is determined based on an identifier of the first terminal device.

In an implementation, the initial value of the first sequence is determined based on a parameter $c_{init}$, and the parameter $c_{init}$ satisfies the following form: $c_{init}=P \times N_{UE-ID}$, where P represents an identifier of a spatial area in which the first terminal device is located, and $N_{UE-ID}$ represents the identifier of the first terminal device.

In an implementation, the identifier of the first terminal device is different from an identifier of a second terminal device, and the first terminal device and the second terminal device are located in a same spatial area; or
the identifier of the first terminal device is the same as an identifier of a second terminal device, and the first terminal device and the second terminal device are located in different spatial areas.

The foregoing is merely an example. The processing unit 1501 and the communication unit 1502 may further perform another function. For more detailed descriptions, refer to the related descriptions in the foregoing method embodiments. Details are not described herein.

FIG. 16 shows a communication apparatus 1600 according to an embodiment of this application. The apparatus shown in FIG. 16 may be an implementation of a hardware circuit of the apparatus shown in FIG. 15. The communication apparatus is applicable to the foregoing flowchart, and is configured to perform functions of the terminal device in the foregoing method embodiments. For ease of description, FIG. 16 shows only main components of the communication apparatus.

As shown in FIG. 16, a communication apparatus 1600 includes a processor 1610 and an interface circuit 1620. The processor 1610 and the interface circuit 1620 are coupled to each other. It may be understood that the interface circuit 1620 may be a transceiver or an input/output interface.

Optionally, in an implementation, the communication apparatus 1600 may further include a memory 1630, configured to store instructions to be executed by the processor 1610, or store input data needed for running instructions by the processor 1610, or store data generated after the processor 1610 runs instructions.

When the communication apparatus 1600 is configured to implement the method shown above, the processor 1610 is configured to implement a function of the processing unit 1501, and the interface circuit 1620 is configured to implement a function of the communication unit 1502.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a transistor logic device, a hardware component, or any combination thereof. The general-purpose processor may be a microprocessor or any regular processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, a CD-ROM, or any other form of storage medium well known in the art. For example, a storage medium is coupled to a processor, so that the processor can read information from the storage medium and write information into the storage medium. Certainly, the storage medium may be a component of the processor. The processor and the storage medium may be disposed in an ASIC.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may also be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

It is clear that a person skilled in the art can make various modifications and variations to this application without departing from the scope of this application. In this way, this application is intended to cover these modifications and variations of this application provided that they fall within the scope defined by the following claims and their equivalent technologies.

## Claims

1. A signal transmission method, applied to a first terminal device or a module in the first terminal device, and comprising:

   determining a first frequency domain resource in a sidelink resource pool, wherein a bandwidth of the first frequency domain resource is equal to a maximum available bandwidth of the sidelink resource pool; and
   sending a first signal through the first frequency domain resource, wherein the first signal is located in a $1^{st}$ symbol of a first time unit in time domain, a signal in the $1^{st}$ symbol is used for automatic gain control, and the first signal is used for sensing measurement on a sidelink.

2. The method according to claim 1, wherein the method further comprises:
   sending a second signal through a second frequency domain resource, wherein the second signal is located in at least one symbol of the first time unit in time domain, and a starting symbol of the at least one symbol is a $2^{nd}$ symbol of the first time unit; and a bandwidth of the second frequency domain resource is less than the bandwidth of the first frequency domain resource.

3. The method according to claim 2, wherein the second signal comprises at least one of the following:
   a demodulation reference signal, a signal carried on a physical sidelink control channel PSCCH, a signal carried on a physical sidelink shared channel PSSCH, and a signal carried on a physical sidelink feedback channel PSFCH.

4. The method according to any one of claims 1 to 3, wherein duration of the first signal is first duration, the first duration is less than or equal to duration of the $1^{st}$ symbol, and a start location of the first signal in time domain is a start location of the $1^{st}$ symbol.

5. The method according to any one of claims 1 to 4, wherein determining the first frequency domain resource in the sidelink resource pool comprises:

   obtaining resource configuration information, wherein the resource configuration information indicates the first frequency domain resource; and

determining the first frequency domain resource in the sidelink resource pool based on the resource configuration information.

6. The method according to claim 5, wherein the resource configuration information is from a network device or a directly connected terminal device, or the resource configuration information is predefined or preconfigured.

7. The method according to any one of claims 1 to 6, wherein the method further comprises:

   receiving a third signal, wherein the third signal is an echo signal of the first signal; and
   obtaining ambient environment sensing information of the first terminal device based on the first signal and the third signal.

8. The method according to claim 7, wherein the receiving the third signal comprises:
   receiving the third signal in a first time range, wherein a start location of the first time range is later than or equal to the start location of the $1^{st}$ symbol, and an end location of the first time range is earlier than or equal to an end location of the $1^{st}$ symbol.

9. The method according to any one of claims 1 to 8, wherein the first signal is determined based on a first sequence, and a type of the first sequence comprises a ZC sequence, a PN sequence, a gold sequence, or an m sequence, wherein an initial value of the first sequence is determined based on an identifier of the first terminal device.

10. The method according to claim 9, wherein the initial value of the first sequence is determined based on a parameter $c_{init}$, and the parameter $c_{init}$ satisfies the following form:

$$c_{init}=P\times N_{UE\text{-}ID},$$

wherein
P represents an identifier of a spatial area in which the first terminal device is located, and $N_{UE\text{-}ID}$ represents the identifier of the first terminal device.

11. The method according to claim 10, wherein the identifier of the first terminal device is different from an identifier of a second terminal device, and the first terminal device and the second terminal device are located in a same spatial area; or
    the identifier of the first terminal device is the same as an identifier of a second terminal device, and the first terminal device and the second terminal device are located in different spatial areas.

12. A communication apparatus, comprising:

    a processing unit, configured to determine a first frequency domain resource in a sidelink resource pool, wherein a bandwidth of the first frequency domain resource is equal to a maximum available bandwidth of the sidelink resource pool; and
    a communication unit, configured to send a first signal through the first frequency domain resource, wherein the first signal is located in a $1^{st}$ symbol of a first time unit in time domain, a signal in the $1^{st}$ symbol is used for automatic gain control, and the first signal is used for sensing measurement on a sidelink.

13. The apparatus according to claim 12, wherein the communication unit is further configured to:
    send a second signal through a second frequency domain resource, wherein the second signal is located in at least one symbol of the first time unit in time domain, and a starting symbol of the at least one symbol is a $2^{nd}$ symbol of the first time unit; and a bandwidth of the second frequency domain resource is less than the bandwidth of the first frequency domain resource.

14. The apparatus according to claim 13, wherein the second signal comprises at least one of the following:
    a demodulation reference signal, a signal carried on a physical sidelink control channel PSCCH, a signal carried on a physical sidelink shared channel PSSCH, and a signal carried on a physical sidelink feedback channel PSFCH.

15. The apparatus according to any one of claims 12 to 14, duration of the first signal is first duration, wherein the first duration is less than or equal to duration of the $1^{st}$ symbol, and a start location of the first signal in time domain is a start

location of the 1st symbol.

16. The apparatus according to any one of claims 12 to 15, wherein the processing unit is specifically configured to:

   obtain resource configuration information, wherein the resource configuration information indicates the first frequency domain resource; and
   determine the first frequency domain resource in the sidelink resource pool based on the resource configuration information.

17. The apparatus according to claim 16, wherein the resource configuration information is from a network device or a directly connected terminal device, or the resource configuration information is predefined or preconfigured.

18. The apparatus according to any one of claims 12 to 17, wherein the communication unit is further configured to:

   receive a third signal, wherein the third signal is an echo signal of the first signal; and
   the processing unit is further configured to obtain ambient environment sensing information of the first terminal device based on the first signal and the third signal.

19. The apparatus according to claim 18, wherein the communication unit is specifically configured to:
   receive the third signal in a first time range, wherein a start location of the first time range is later than or equal to the start location of the 1st symbol, and an end location of the first time range is earlier than or equal to an end location of the 1st symbol.

20. The apparatus according to any one of claims 12 to 19, wherein the first signal is determined based on a first sequence, and a type of the first sequence comprises a ZC sequence, a PN sequence, a gold sequence, or an m sequence, wherein an initial value of the first sequence is determined based on an identifier of the first terminal device.

21. The apparatus according to claim 20, wherein the initial value of the first sequence is determined based on a parameter $c_{init}$, and the parameter $c_{init}$ satisfies the following form:

$$c_{init} = P \times N_{UE\text{-}ID},$$

   wherein
   P represents an identifier of a spatial area in which the first terminal device is located, and $N_{UE\text{-}ID}$ represents the identifier of the first terminal device.

22. The apparatus according to claim 21, wherein the identifier of the first terminal device is different from an identifier of a second terminal device, and the first terminal device and the second terminal device are located in a same spatial area; or
   the identifier of the first terminal device is the same as an identifier of a second terminal device, and the first terminal device and the second terminal device are located in different spatial areas.

23. A communication apparatus, comprising a processor and an interface circuit, wherein the interface circuit is configured to receive a signal from another communication apparatus and transmit the signal to the processor, or send a signal from the processor to another communication apparatus, and the processor is configured to implement the method according to any one of claims 1 to 11 through a logic circuit or by executing code instructions.

24. A computer program product, comprising instructions, wherein when the instructions are executed, the method according to any one of claims 1 to 11 is implemented.

25. A chip, comprising a processor, wherein the processor is coupled to a memory, and is configured to execute a computer program or instructions stored in the memory, to enable the chip to implement the method according to any one of claims 1 to 11.

26. A computer-readable storage medium, wherein the storage medium stores a computer program or instructions; and when the computer program or the instructions are executed by a communication apparatus, the method according to any one of claims 1 to 11 is implemented.

Guard band —

RB set #1 —                          — Channel #1

Resource
pool #1      Guard band —

RB set #2 —                          — Channel #2

Guard band —

## FIG. 1

Guard band —

Resource
pool #2      RB set #3 —                 — Channel #3

Guard band —

## FIG. 2

FIG. 3

FIG. 4

Step 501: A first terminal device
determines a first frequency domain
resource in a sidelink resource pool

Step 502: The first terminal device sends
a first signal through the first frequency
domain resource, and sends a second
signal through a second frequency
domain resource

Step 503: A first device receives a third
signal, and obtains environment sensing
information around the first terminal
device based on the first signal and the
third signal

FIG. 5

FIG. 6

EP 4 716 335 A1

Second signal

| DMRS | PSSCH | PSSCH | DMRS | PSSCH | PSSCH | DMRS | PSSCH | PSSCH | DMRS | PSSCH | PSSCH | GAP |

PSCCH

0  1  2  3  4  5  6  7  8  9  10  11  12  13

Time domain

First signal

FIG. 7

FIG. 8

FIG. 9

FIG. 10

FIG. 11

First time unit

0 1 2 3 4 5 6 7 8 9 10 11 12 13

DMRS | PSSCH | PSSCH | DMRS | PSSCH | PSSCH | DMRS | PSSCH | PSSCH | DMRS | PSSCH | PSSCH | GAP

PSCCH

First signal

S1 S3 S4 S2

Receive a third signal

FIG. 12

EP 4 716 335 A1

First time unit

| 0 | 1 | 2 | 3 | 4 | 5 | 6 | 7 | 8 | 9 | 10 | 11 | 12 | 13 |

| | DMRS | PSSCH | PSSCH | DMRS | PSSCH | PSSCH | DMRS | PSSCH | PSSCH | DMRS | PSSCH | PSSCH | GAP |

PSCCH

First signal

S1          S3          Receive a
                        third signal          S2

FIG. 13

EP 4 716 335 A1

First time unit

| 0 | 1 | 2 | 3 | 4 | 5 | 6 | 7 | 8 | 9 | 10 | 11 | 12 | 13 |
|---|---|---|---|---|---|---|---|---|---|----|----|----|----|

| DMRS | PSSCH | PSSCH | DMRS | PSSCH | PSSCH | DMRS | PSSCH | PSSCH | DMRS | PSSCH | PSSCH | GAP |
|------|-------|-------|------|-------|-------|------|-------|-------|------|-------|-------|-----|

PSCCH

First signal

Receive a third signal

Receive the third signal

S1　　　S3　　S4　　　　S2

FIG. 14

1500

Processing unit — 1501

Communication unit — 1502

FIG. 15

Communication apparatus 1600

Processor 1610

Interface circuit 1620

Memory 1630

FIG. 16

## INTERNATIONAL SEARCH REPORT

| International application No. |
|---|
| **PCT/CN2024/093729** |

| A. | CLASSIFICATION OF SUBJECT MATTER |
|---|---|

H04W 72/0446(2023.01)i

According to International Patent Classification (IPC) or to both national classification and IPC

| B. | FIELDS SEARCHED |
|---|---|

Minimum documentation searched (classification system followed by classification symbols)

IPC: H04W; H04Q

Documentation searched other than minimum documentation to the extent that such documents are included in the fields searched

Electronic data base consulted during the international search (name of data base and, where practicable, search terms used)

CNKI; CNTXT; ENTXTC; DWPI; 3GPP: 侧行, V2X, D2D, 资源池, 频带, 带宽, 频域, 最大, 可用, 时域, 第一, 符号, 自动控制增益, 感知, 测量, SL, sidelink, resource pool, band, frequency domain, time domain, max, available, first, symbol, AGC, sensing, measur+

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115066031 A (HEFEI YIRUI COMMUNICATION TECHNOLOGY CO., LTD. et al.) 16 September 2022 (2022-09-16) description, paragraphs 50-126 | 1-26 |
| A | CN 112703801 A (IDAC HOLDINGS, INC.) 23 April 2021 (2021-04-23) entire document | 1-26 |
| A | US 2020275425 A1 (CAO YU et al.) 27 August 2020 (2020-08-27) entire document | 1-26 |
| A | US 2023171060 A1 (LENOVO (SINGAPORE) PTE. LTD.) 01 June 2023 (2023-06-01) entire document | 1-26 |
| A | WO 2018028475 A1 (ZTE CORP.) 15 February 2018 (2018-02-15) entire document | 1-26 |
| A | WO 2022028379 A1 (HUAWEI TECHNOLOGIES CO., LTD.) 10 February 2022 (2022-02-10) entire document | 1-26 |

☐ Further documents are listed in the continuation of Box C.    ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 June 2024** | **04 July 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/093729**

| Patent document cited in search report | | | Publication date (day/month/year) | Patent family member(s) | | | Publication date (day/month/year) |
|---|---|---|---|---|---|---|---|
| CN | 115066031 | A | 16 September 2022 | | None | | |
| CN | 112703801 | A | 23 April 2021 | US | 2024080806 | A1 | 07 March 2024 |
| | | | | US | 2021329596 | A1 | 21 October 2021 |
| | | | | WO | 2020033422 | A1 | 13 February 2020 |
| | | | | JP | 2023100858 | A | 19 July 2023 |
| | | | | CA | 3108542 | A1 | 13 February 2020 |
| | | | | JP | 2021533648 | A | 02 December 2021 |
| | | | | KR | 20210056326 | A | 18 May 2021 |
| | | | | EP | 3834555 | A1 | 16 June 2021 |
| | | | | SG | 11202101089 | A1 | 30 March 2021 |
| US | 2020275425 | A1 | 27 August 2020 | WO | 2020169110 | A1 | 27 August 2020 |
| US | 2023171060 | A1 | 01 June 2023 | WO | 2023100113 | A1 | 08 June 2023 |
| | | | | US | 2023283435 | A1 | 07 September 2023 |
| | | | | CN | 118216109 | A | 18 June 2024 |
| WO | 2018028475 | A1 | 15 February 2018 | CN | 107734649 | A | 23 February 2018 |
| WO | 2022028379 | A1 | 10 February 2022 | EP | 4192050 | A1 | 07 June 2023 |
| | | | | CN | 114071405 | A | 18 February 2022 |
| | | | | IN | 202317011916 | A | 19 April 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310689020